# EUROPÄISCHE PATENTSCHRIFT

(11) **EP 3 369 700 B1**
(45) Veröffentlichungstag und Bekanntmachung des Hinweises auf die Patenterteilung: **07.07.2021**
(21) Anmeldenummer: 17159180.3
(22) Anmeldetag: 03.03.2017
(51) Int. Cl.: B67D 7/02, B67D 7/52

(54) **ZAPFVENTIL FÜR ZWEI MAXIMALE VOLUMENSTRÖME**
DISPENSING NOZZLE FOR TWO MAXIMUM FLOW-RATES
BUSE DE DISTRIBUTION POUR DEUX DEBITS MAXIMALES

(43) Veröffentlichungstag der Anmeldung: 05.09.2018
(73) Patentinhaber: ELAFLEX HIBY GmbH & Co. KG, 22525 Hamburg (DE)
(72) Erfinder: KUNTER, Stefan, 22337 Hamburg (DE); MEYER, Heinz-Ulrich, 22589 Hamburg (DE)
(74) Vertreter: Glawe, Delfs, Moll

(56) Entgegenhaltungen:
- EP-A1- 1 880 975
- EP-A1- 2 386 520
- DE-A1-102008 049 150

## Beschreibung

Die Erfindung betrifft ein Zapfventil zur Abgabe einer Flüssigkeit in einen Tank eines Kraftfahrzeugs.

Zapfventile zur Betankung von Kraftfahrzeugen sind beispielsweise aus EP 2 186 773 A1 bekannt. Ebenfalls bekannt sind Zapfventile mit einem Fehlbetankungsschutz, der sicherstellen soll, dass eine Flüssigkeitsabgabe nur nach dem Einführen in einen speziell für diese Flüssigkeit vorgesehenen Tank erfolgt. In einfachen Fällen kann ein solcher Fehlbetankungsschutz lediglich unterschiedliche Durchmesser von Auslaufrohr des Zapfventils und Einfüllstutzen des zugehörigen Tanks beinhalten, wie beispielsweise bekannt bei Zapfventilen für Benzin- und Dieselkraftstoff.

Im Zuge der sich verschärfenden Abgasnormen benötigen Diesel-Kraftfahrzeuge Hilfsflüssigkeiten, die die Verbrennung schadstoffarm gestalten und damit Abgasemissionen senken sollen. Bekannt ist hier insbesondere 32,5 %ige Harnstofflösung (bekannt unter dem Markennamen AdBlue), die zur Senkung der Stickoxidemissionen von Dieselmotoren dient.

Harnstofflösung als Hilfsflüssigkeit ist im LKW-Bereich bereits weit verbreitet und gewinnt zunehmend Bedeutung bei Diesel-PKW. EP 2 733 113 A1 offenbart ein zur Abgabe von AdBlue geeignetes Zapfventil.

EP 2 386 520 A1 offenbart ein Zapfventil nach dem Oberbegriff des Anspruchs 1.

Der Erfindung liegt die Aufgabe zugrunde, ein Zapfventil der eingangs genannten Art zu schaffen, das vielseitig verwendbar ist.

Die Erfindung löst diese Aufgabe durch ein Zapfventil mit den folgenden Merkmalen:
a) das Zapfventil weist einen ersten einstellbaren maximalen Volumenstrom auf,
b) das Zapfventil weist einen zweiten einstellbaren maximalen Volumenstrom auf, der höher als der erste einstellbare maximale Volumenstrom ist,
c) eine Steuereinrichtung, mittels der wahlweise der erste oder zweite maximale Volumenstrom einstellbar ist,
d) eine Sensoreinrichtung, die zur Wechselwirkung mit einem dem Tank des Kraftfahrzeugs zugeordneten Signalgeber ausgebildet ist, und die die Steuereinrichtung ansteuert.

Ein Zapfventil ist eine Vorrichtung zur Kontrolle des Flüssigkeitsdurchflusses während eines Betankungsvorgangs. Die Anforderungen an die Bau- und Arbeitsweise von automatischen Zapfventilen für die Benutzung an Zapfsäulen sind in der DIN EN 13012 geregelt. Dort definierte Begriffe werden auch in der vorliegenden Anmeldung verwendet.

Das Merkmal "zur Abgabe einer Flüssigkeit in ein Tank eines Kraftfahrzeugs" drückt die Eignung des Zapfventils für einen solchen Betankungsvorgang aus.

Mittels eines sog. Hauptventils steuert der Benutzer die Flüssigkeitsabgabe. Zur Betätigung des Hauptventils dient in der Regel ein Betätigungshebel (auch Schalthebel genannt). Die Flüssigkeit wird durch ein Auslaufrohr in den zu befüllenden Behälter geleitet.

Das Zapfventil weist einen ersten und einen zweiten einstellbaren maximalen Volumenstrom auf. Dies bedeutet, dass der Benutzer mittels des Schalthebels den Volumenstrom jeweils nur bis zu dem eingestellten ersten oder zweiten maximalen Volumenstrom steuern kann. Der jeweils eingestellte maximale Volumenstrom begrenzt somit die maximale Flüssigkeitsabgabe pro Zeiteinheit. Der zweite maximale Volumenstrom ist höher als der erste maximale Volumenstrom. Die Erfindung ist nicht auf ein Zapfventil mit genau zwei einstellbaren maximalen Volumenströmen beschränkt, sie umfasst auch Ausführungsformen, bei denen das Zapfventil drei oder mehr einstellbare maximale Volumenströme aufweist.

Mittels einer Steuereinrichtung ist wahlweise der erste oder zweite (gegebenenfalls auch weitere) maximale Volumenstrom einstellbar. Diese Steuereinrichtung ist vom Benutzer nicht im Rahmen einer üblichen Betätigung des Zapfventils beeinflussbar, sie begrenzt somit den Volumenstrom, den das Zapfventil bei Betätigung (üblicherweise des Schalthebels) bis zum Anschlag abgeben kann.

Die Steuereinrichtung wird von einer Sensoreinrichtung angesteuert, die zur Wechselwirkung mit einem dem Tank des Kraftfahrzeugs zugeordneten Signalgeber ausgebildet ist. Abhängig von der Ausgestaltung dieses Tanks und des zugehörigen Einfüllstutzens kann somit über den Signalgeber des Tanks, die Sensoreinrichtung und die Steuereinrichtung der erste oder der höhere zweite maximale Volumenstrom (gegebenenfalls auch weitere noch höhere Volumenströme) des Zapfventils freigegeben werden.

Das erfindungsgemäße Zapfventil weist besondere Vorteile für die Betankung von Diesel-Pkw mit AdBlue auf.

Lkw besitzen verhältnismäßig großvolumige Tanks für AdBlue und einen zugehörigen Einfüllstutzen nach ISO 22241-4. Dieser Einfüllstutzen ist mit einem Ringmagneten versehen, der mit einem Sensor eines zugehörigen Lkw-AdBlue-Zapfventils zusammenwirkt und damit einen Fehlbetankungsschutz bietet. Lkw-Zapfventile erlauben in der Regel einen verhältnismäßig hohen maximalen Volumenstrom von AdBlue von etwa 20 bis 40 l/min.

Diesel-Pkw besitzen in der Regel deutlich kleinere AdBlue-Tanks, typischerweise mit einem Volumen von etwa 10 bis 15 l. Ein zugehöriger Einfüllstutzen nach ISO 22241-5 weist den vorstehend beschriebenen Ringmagneten nicht auf und ist ausgelegt für einen deutlich geringeren Volumenstrom von typischerweise maximal 10 l/min, in der Regel etwa 5 l/min. Querschnitt und Entlüftung des Einfüllstutzens erlauben keine höheren Volumenströme. Diese Pkw-Tanks sind dementsprechend nicht ausgelegt für die Betankung mit Lkw-AdBlue-Zapfventilen.

Im Zuge der Einführung der Abgasnorm Euro 6c verschärfen sich die Anforderungen an die Stickoxid-Emissionen von Diesel-Pkw im tatsächlichen Fahrbetrieb, dies erfordert höhere AdBlue-Mengen im SCR-Katalysator bis zu etwa 0,6 l pro 100 km. Um hinreichende Fahrintervalle zwischen den Betankungsvorgängen zu gewährleisten, erfordert dies in Pkw größere Tankvolumina von beispielsweise etwa 30 l. Die Befüllung solcher Tanks mit einem üblichen Pkw-AdBlue-Zapfventil (Volumenstrom etwa 5 l/min) ist zeitaufwendig. Die AdBlue-Tanks bei entsprechenden Pkw werden daher häufig mit einem Einfüllstutzen versehen, der höhere Volumenströme erlaubt. Ein solcher Einfüllstutzen weist dann einen Ringmagneten auf.

Die vorliegende Erfindung erlaubt es, die AdBlue-Tanks sämtlicher Pkw mit einem erfindungsgemäßen Zapfventil zu betanken. Handelt es sich um einen Tank mit eher geringem Volumen und einem Einfüllstutzen nach ISO 22241-5 ohne Ringmagnet, wird dem erfindungsgemäßen Zapfventil lediglich der geringere erste einstellbare maximale Volumenstrom eingestellt. Beim Betanken wird dann auch bei Betätigung des Schalthebels bis zum Anschlag nur ein solcher Volumenstrom freigegeben, der Einfüllstutzen und Entlüftung nicht überfordert.

Weist der Pkw einen größeren AdBlue-Tank mit einem entsprechend gemäß ISO 22241-5 mit Ringmagnet ausgelegten Einfüllstutzen auf, kann über den Ringmagneten als Signalgeber die Sensoreinrichtung und die Steuereinrichtung der zweite, höhere maximale Volumenstrom freigegeben werden.

Erfindungsgemäß beträgt der erste einstellbare maximale Volumenstrom vorzugsweise 2 bis 10 l/min, weiter vorzugsweise 3 bis 8 l/min, weiter vorzugsweise 4 bis 6 l/min. es handelt sich um Volumenströme geeignet für Einfüllstutzen nach ISO 22241-5 ohne Ringmagnet.

Der zweite einstellbare maximale Volumenstrom beträgt vorzugsweise 12 bis 30 l/min, weiter vorzugsweise 15 bis 25 l/min, weiter vorzugsweise 18 bis 22 l/min. es handelt sich um geeignete Volumenströme für Einfüllstutzen gemäß ISO 22241-5 mit Ringmagnet, die ein zügiges Befüllen auch größerer AdBlue-Tanks ermöglichen.

Erfindungsgemäß ist bevorzugt, dass standardmäßig der erste einstellbare maximale Volumenstrom eingestellt ist und der zweite einstellbare maximale Volumenstrom nur dann eingestellt wird, wenn die Sensoreinrichtung einen dem Tank des Kraftfahrzeugs zugeordneten entsprechenden Signalgeber detektiert. Höhere Volumenströme werden nur dann freigegeben, wenn die Sensoreinrichtung anhand eines zugehörigen Signalgebers des Tanks erkennt, dass dieser Tank zum Befüllen mit entsprechend größeren Volumenströmen geeignet ist.

Für den Betrieb von Sensor- und/oder Steuereinrichtung kann eine separate Energiezufuhr oder Energiequelle (bevorzugt elektrische Energie) vorgesehen sein. Bei einer bevorzugten Ausführungsform der Erfindung erfordern die Steuereinrichtung und/oder die Sensoreinrichtung, bevorzugt beide, keine Fremdenergie.

Fremdenergie ist jedwede Energieform, die eigens für den Betrieb des Zapfventils zugeführt oder einer im Zapfventil angeordneten Energiequelle entnommen wird. Der Begriff Fremdenergie umfasst insbesondere elektrische Energie, somit arbeitet das erfindungsgemäße Zapfventil ohne elektrische Energie, benötigt somit keine externe elektrische Energiezufuhr oder eine interne elektrische Energiequelle, beispielsweise Batterie.

Die erfindungsgemäße Ausführung ohne Fremdenergie, insbesondere elektrische Energie, erlaubt eine Verwendung des erfindungsgemäßen Zapfventils im unmittelbaren Umfeld von weiteren Zapfventilen, aus denen Kraftstoff abgegeben wird, die daher besonderen Anforderungen an den Explosionsschutz genügen müssen. Beispielsweise erlaubt es die Erfindung, ein Zapfventil zur Abgabe von Harnstofflösung im unmittelbaren Umfeld von Diesel- oder auch Benzinzapfventilen anzuordnen, beispielsweise an der gleichen Zapfsäule.

Signalgeber und Sensoreinrichtung können erfindungsgemäß bevorzugt Magneten sein, sind jedoch nicht darauf beschränkt. Bevorzugt ist die Sensoreinrichtung zur Detektion eines dem Tank des Kraftfahrzeugs zugeordneten Magnetgebers ausgebildet. Weiter bevorzugt ist sie zur Detektion eines Ringmagneten eines Einfüllstutzens nach ISO 22241-5 mit Ringmagnet ausgebildet.

Bei einer bevorzugten Ausführungsform der Erfindung weist die Sensoreinrichtung einen im Bereich des Auslaufrohrs des Zapfventils verschieblich angeordneten Magneten auf, der mit einer mechanischen Signalübertragungsvorrichtung zur Übertragung eines Steuersignals an die Steuereinrichtung verbunden ist. Beim Einführen in einen Einfüllstutzen mit einem entsprechenden magnetischen Signalgeber wird dieser Magnet verschoben und das entsprechende Signal über die mechanische Einrichtung an die Steuereinrichtung übertragen. Zu diesem Zweck kann die mechanische Signalübertragungsvorrichtung eine mit dem verschieblich angeordneten Magneten kinematisch gekoppelte Signalstange aufweisen, die in Axialrichtung des Auslaufrohrs des Zapfventils verschieblich ist. Auf diese Weise erfolgt die Signalübertragung mechanisch vom Auslaufende des Auslaufs hin zu der Steuereinrichtung, die üblicherweise im Bereich des Hauptventils des Zapfventils angeordnet ist.

Erfindungsgemäß kann vorgesehen sein, dass die Signalstange im vom verschieblich angeordneten Magneten abgewandten Bereich zum Verschließen bzw. Freigeben eines Druckkanals ausgebildet ist. Wie nachstehend im Kontext der Ausführungsbeispiele noch beschrieben kann so die Steuereinrichtung unter Zuhilfenahme des Betriebsdrucks stromab des Hauptventils den ersten oder zweiten maximalen Volumenstrom einstellen, bevorzugt unter Zuhilfenahme einer nachstehend ebenfalls beschriebenen automatischen Abschaltvorrichtung des Zapfventils.

Bei einer alternativen Ausführungsform der Erfindung kann vorgesehen sein, dass die Signalstange im vom verschieblich angeordneten Magneten abgewandten Bereich einen ersten Steuermagneten aufweist, der zur Wechselwirkung mit einem zweiten Steuermagneten der Steuereinrichtung ausgebildet ist. Da das Auslaufrohr gegenüber Einlass und Hauptkörper des Zapfventils in der Regel abgewinkelt ist, ist so auf einfache und wirksame Art und Weise eine Signalübertragung über diesen abgewinkelten Bereich hinweg möglich, wie nachstehend im Kontext des Ausführungsbeispiels ebenfalls beschrieben werden wird.

Erfindungsgemäß ist es somit bevorzugt, dass die Wirkverbindung zwischen Sensoreinrichtung und Steuereinrichtung durch Druck, mechanisch und/oder magnetisch erfolgt.

Erfindungsgemäß kann die die Steuereinrichtung zur Einstellung eines ersten und zweiten maximalen Öffnungshubs eines Hauptventils des Zapfventils ausgebildet sein. Der durch vollständiges Betätigen des Schalthebels maximal erreichbare Öffnungshub des Hauptventils wird somit durch die Steuereinrichtung begrenzt.

Gegenstand der Erfindung ist somit auch ein erfindungsgemäßes Zapfventil, das zur Abgabe von Harnstofflösung ausgebildet ist.

Ein weiterer Gegenstand der Erfindung ist eine Zapfsäule zur kombinierten Abgabe von Kraftstoffen und Harnstofflösung, die wenigstens ein Zapfventil zur Abgabe von Kraftstoff (insbesondere Dieselkraftstoff) aufweist. Erfindungsgemäß weist sie ferner wenigstens ein erfindungsgemäßes Zapfventil zur Abgabe von Harnstofflösung auf. Eine solche Zapfsäule erlaubt ein bequemes gleichzeitiges oder unmittelbar aufeinander folgendes Betanken mit Kraftstoff, insbesondere Dieselkraftstoff, und Harnstofflösung. Ein zwischenzeitliches Rangieren des Kraftfahrzeugs ist nicht erforderlich. Die Ausgestaltung des erfindungsgemäßen Zapfventils zur Abgabe von Harnstofflösung ohne Zufuhr von Fremdenergie, insbesondere elektrische Energie, erlaubt dessen Verwendung im unmittelbaren Umfeld einer Zapfsäule zur Abgabe von Kraftstoffen.

Ausführungsbeispiele der Erfindung wird im Folgenden anhand der Zeichnung beschrieben. Darin zeigen:
- Fig. 1: eine Ausführungsform eines erfindungsgemäßen Zapfventils in einer Schnittzeichnung;
- Fig. 2: in einem Ausschnitt aus Fig. 1 das Auslaufende des Auslaufrohrs;
- Fig. 3: in einem Ausschnitt aus Fig. 1 den Bereich des Hauptventils;
- Fig. 4: das Zapfventil im Betriebszustand in einem Einfüllstutzen nach ISO 22241-5 ohne Ringmagnet;
- Fig. 5: in einem Ausschnitt aus Fig. 4 das Auslaufende des Auslaufrohrs;
- Fig. 6: in einem Ausschnitt aus Fig. 4 den Bereich des Hauptventils;
- Fig. 7: das Zapfventil im Betriebszustand in einem Einfüllstutzen nach ISO 22241-5 mit Ringmagnet;
- Fig. 8: in einem Ausschnitt aus Fig. 7 das Auslaufende des Auslaufrohrs;
- Fig. 9: in einem Ausschnitt aus Fig. 7 den Bereich des Hauptventils;
- Fig. 10: eine zweite Ausführungsform der Erfindung mit einem anderen Signalübertragungsweg bei eingestelltem ersten maximalen Volumenstrom;
- Fig. 11: die zweite Ausführungsform der Erfindung bei eingestelltem zweiten maximalen Volumenstrom;
- Fig. 12: schematisch Einfüllstutzen mit Schnittstellen nach ISO 22241-5 mit und ohne Ringmagnet;
- Fig. 13: schematisch in einem Ablaufdiagramm die Funktionsweise eines erfindungsgemäßen Zapfventils.

Ein erfindungsgemäßes Zapfventil (umgangssprachlich auch Zapfpistole genannt) weist ein Ventilgehäuse 1, einen mit einem nicht dargestellten Schlauch verbundenen Einlass 2 für Flüssigkeit, ein Auslaufrohr 3 und einen Schalthebel 4 auf. Der Schalthebel 4 betätigt in bekannter und beispielsweise in EP 2 386 520 A1 beschriebener Weise Hauptventil 5 des Zapfventils. Eine Fühlerleitung 6 kommuniziert pneumatisch mit der Umgebung des Auslaufendes des Auslaufrohrs 3 und kann so in herkömmlicher und in der genannten EP-Schrift beschriebener Art und Weise eine Tank-Voll-Abschaltung bewirken.

Im Bereich des Auslaufendes des Auslaufrohrs 3 ist ein Sicherheitsventil 7 vorgesehen, dass stromab gegen einen Ventilsitz schließt. Das stromauf weisende Ende des Ventilschaftes 9 ist mit einem Magnet 10 versehen.

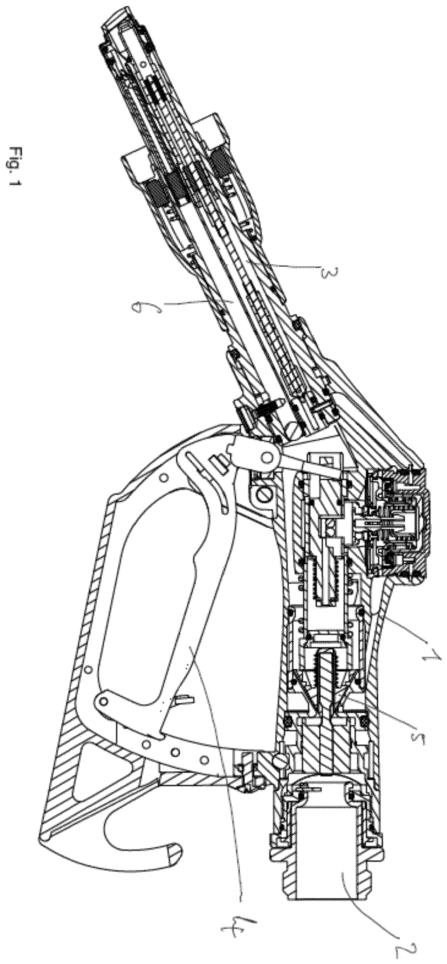

Um den Außenumfang des Auslaufrohrs 3 ist im Bereich des Auslaufendes eine Schiebehülse 11 angeordnet. Die Schiebehülse 11 wird von einer Druckfeder 12 in die in Figur 1 dargestellte Sperrstellung vorgespannt, in der sie sich in einer axialen Endstellung in Richtung auf das Auslaufende des Auslaufrohrs 3 zu befindet. An der Schiebehülse 11 ist ein ringförmiger Wirkmagnet 13 angeordnet. Die Schiebehülse 11 ist verschieblich in einer ihren Außenumfang konzentrisch umhüllenden zylindrischen Tasche 14, die auch die Druckfeder 12 aufnimmt.

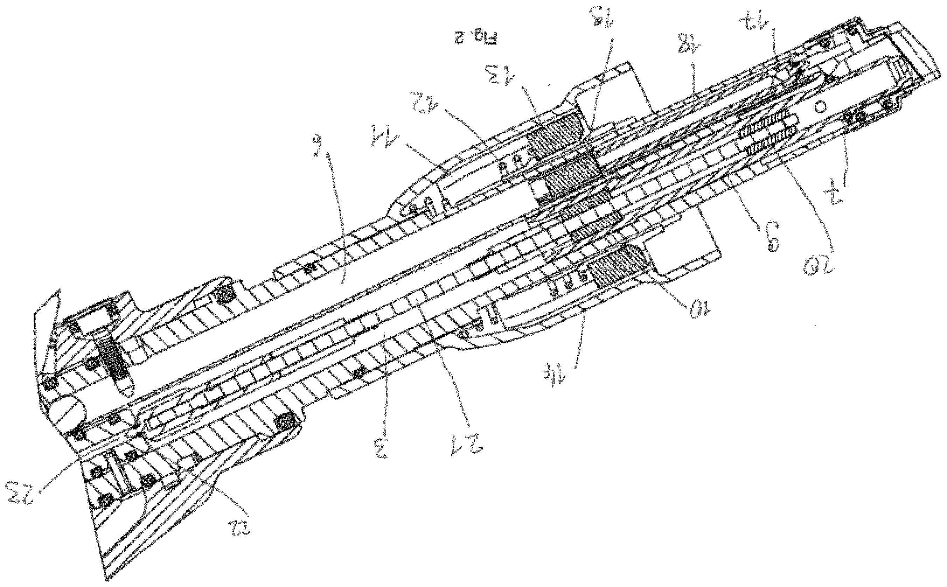

In der in Fig. 1 bzw. 2 gezeigten Stellung ist das Sicherheitsventil durch die magnetische Wechselwirkung zwischen Wirkmagnet 13 und Magnet 10 in die Schließstellung vorgespannt.

Die Fühlerleitung 6 ist Richtung Auslauf mit einem Fühlerleitungsventil 17 verschlossen, das am gegenüberliegenden Ende des Ventilschafts 18 einen Betätigungsmagneten 19 aufweist. Dieses Ventil 17 ist ebenfalls durch die magnetische Wechselwirkung zwischen Wirkmagnet 13 und Betätigungsmagnet 19 in die Schließstellung vorgespannt.

Nahe dem Auslaufende des Auslaufrohrs ist ein Sensormagnet 20 angeordnet, der gemeinsam mit einer Sensorstange 21 axial verschieblich ist. Die Sensorstange 21 ist in die in Figur 2 dargestellte Schließstellung vorgespannt, in der ihr stromauf weisendes Ende 22 einen Druckkanal 23 verschließt.

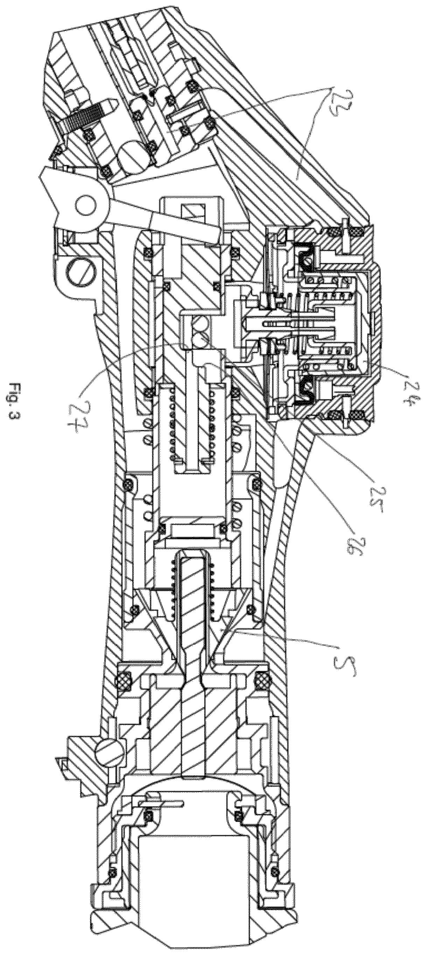

In Fig. 3 ist eine Einrichtung mit einer Membran 24 gezeigt, die in bekannter und beispielsweise in EP 2 386 520 A1 beschriebener Art und Weise der Tank-Voll-Abschaltung dient, wenn das Auslaufende des Auslaufrohrs in Flüssigkeit eingetaucht und es damit zu Druckschwankungen in der Fühlerleitung 6 kommt. Diese automatische Tank-Voll-Abschaltung ist dem Fachmann geläufig und bedarf hier keiner näheren Beschreibung.

Die Membraneinrichtung hat erfindungsgemäß zusätzlich die Funktion einer Steuereinrichtung. Zu diesem Zweck ist vorgesehen, dass die Membranrollen 25 auf unten noch näher geschilderte Art und Weise zwei unterschiedliche Betriebsstellungen einnehmen können, in der ersten Betriebsstellung schlagen sie beim Ziehen des Schalthebels 4 gegen einen ersten Anschlag 26, in der zweiten Betriebsstellung gegen einen zweiten Anschlag 27, der in Axialrichtung des Betätigungshubs des Hauptventils 5 gegenüber dem ersten Anschlag 26 verschoben ist und dadurch bewirkt, dass das Hauptventil 5 bei Betätigung des Schalthebels 4 und Wechselwirkung der Membranrollen 26 mit dem zweiten Anschlag 27 einen größeren Öffnungshub aufweist.

Wird in dem in Figur 1 dargestellten Betriebszustand mit geschlossenem Sicherheitsventil 7 der Betätigungshebel 4 gezogen, öffnet zunächst das Hauptventil 5 und lässt Flüssigkeit in das Auslaufrohr 3 einströmen. Dort steigt der Druck, da das Sicherheitsventil 7 keinen Austritt aus dem Auslaufrohr 3 ermöglicht. Sobald der Druck über einen festgelegten Schwellwert ansteigt, entsteht über der bei 15 angedeuteten Tankvollabschaltung bzw. deren Membran ein solcher Differenzdruck, dass diese die Tankvollabschaltung auslöst, den Betätigungshebel 4 vom Hauptventil 5 in bekannter Weise entkoppelt, sodass das Hauptventil 5 durch seine Schließfeder wieder geschlossen wird. Der Schwellwert für den Druck, bei dem eine solche Auslösung erfolgt, liegt oberhalb des bei einer üblichen Betankung im Auslaufrohr 3 herrschenden Druckes und unterhalb des am Eingang 2 des Zapfventils (durch die Pumpe der Zapfsäule bereitgestellten) Betriebsdrucks.

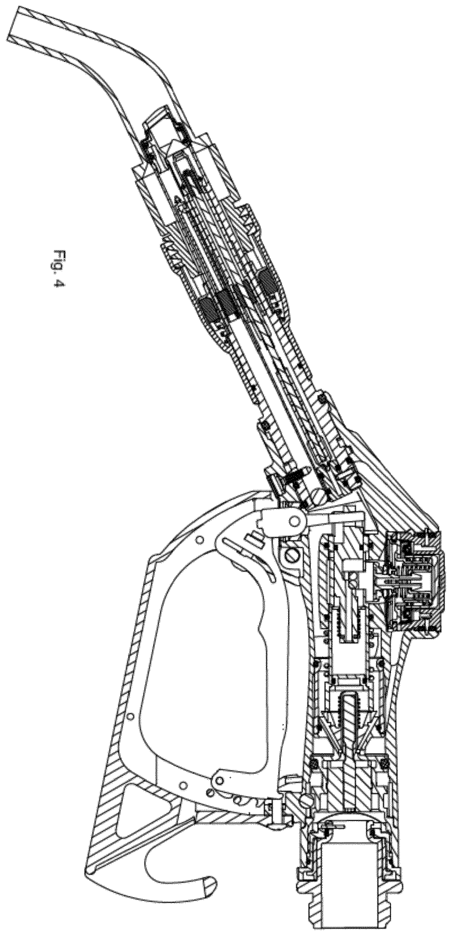

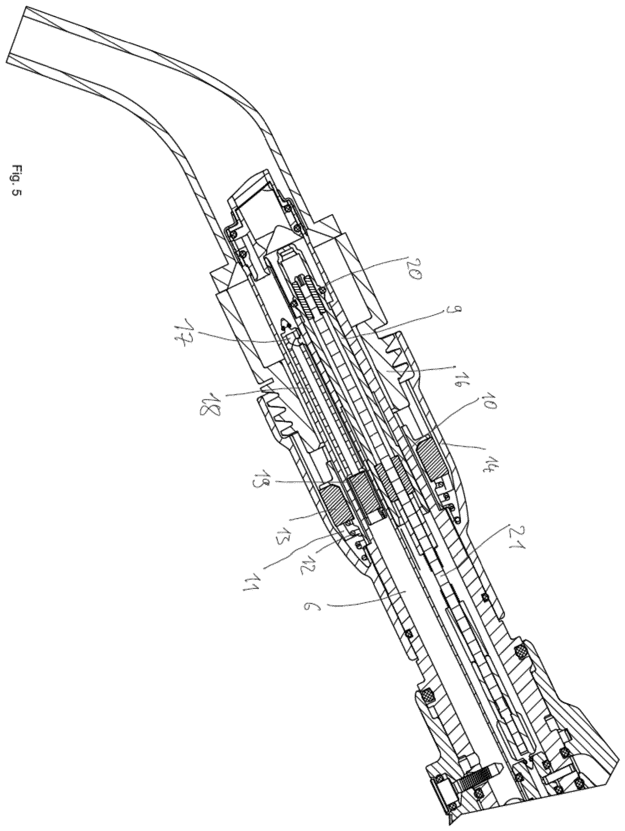

In Figur 4 bis 6 ist das Auslaufende des Auslaufrohrs 3 vollständig eingeführt in den Tankstutzen 16 eines Harnstoffstanks eines PKW nach ISO 22241-5 ohne Ringmagnet. Dieser ist so gestaltet, dass er das Auslaufrohr bereits unmittelbar im Bereich des Beginns des Einfüllstützens eng umschließt, wie in Figur 5 dargestellt. Die ringförmige Stirnfläche der Schiebehülse 10 stößt gegen die entsprechende Gegenfläche des Tankeinfüllstutzens 16 und die Schiebehülse 11 wird von der in Figur 1 und 2 dargestellten Sperrstellung in die in Figur 5 dargestellte Freigabestellung gegen den Druck der Feder 12 verschoben. In dieser Stellung stößt das stromauf gerichtete Ende der Schiebehülse 11 gegen einen Anschlag. Mit der Schiebehülse 11 wird auch der Wirkmagnet 13 entsprechend axial verschoben. Durch die magnetische Wirkverbindung zwischen dem Wirkmagneten 13 und dem Magneten 10 am Ventilschaft 9 wird das Sicherheitsventil 7 in die in Figur 5 dargestellte Öffnungsstellung bewegt. Diese Öffnungsbewegung geschieht in Richtung stromauf. Der Betankungsvorgang kann jetzt begonnen werden durch Ziehen des Schalthebels 4 und dadurch bewirktes Öffnen des Hauptventils 5. Der Ausstrom von Flüssigkeit durch das Auslaufrohr 3 ist dergestalt, dass das Sicherheitsventil 7 in seiner Öffnungsstellung verbleibt und der Betankungsvorgang durchgeführt werden kann. Ebenfalls in die Öffnungsstellung bewegt wird durch die axiale Verschiebung des Wirkmagneten 13 der Betätigungsmagnet 19, so dass das Fühlerleitungsventil 17 ebenfalls geöffnet wird.

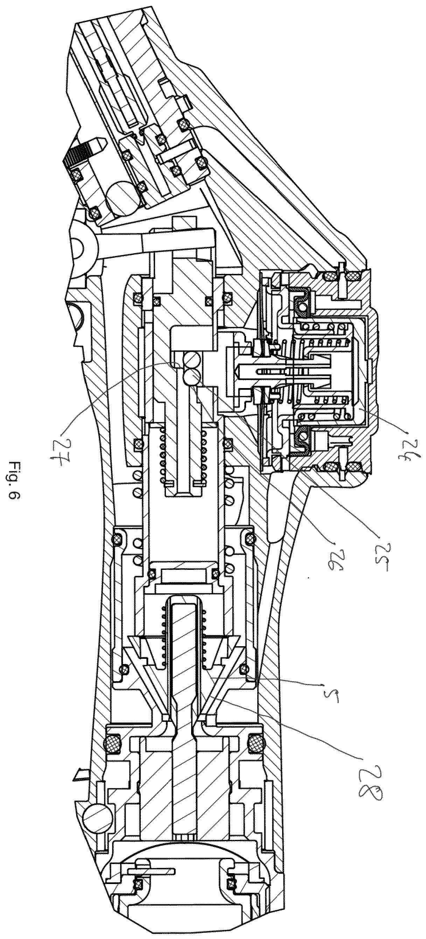

In dem dargestellten Betriebszustand bleibt die Sensorstange 21 in der Stellung, in der sie den Druckkanal 23 verschließt. Die Membraneinrichtung 24 bleibt in der oberen Stellung (Fig. 6). Beim Ziehen des Schalthebels 4 geraten die Membranrollen 25 gegen den ersten Anschlag 26 und das Hauptventil 5 öffnet mit einem verhältnismäßig geringen Öffnungshub, der Öffnungsspalt 28 erlaubt im Ausführungsbeispiel einen maximalen Volumenstrom von etwa 5 l/min. Auf diese Weise hat die Membraneinrichtung 24 im Zusammenwirken mit der Positionierung der Membranrollen 25 als Steuereinrichtung den ersten (geringeren) maximalen Volumenstrom eingestellt.

Der Betankungsvorgang kann in üblicher Weise durch Loslassen bzw. Entriegeln des Betätigungshebels 4 beendet werden. Ist der Tank weitestgehend gefüllt, taucht das Ende des Auslaufrohrs 3 und damit auch die Fühlerleitung 6 in Flüssigkeit ein. Der dabei auftretende Druckunterschied bewirkt pneumatisch in herkömmlicher und beispielsweise in EP 2 386 520 A1 beschriebener Weise eine Abschaltung des Hauptventils und damit eine Beendigung des Betankungsvorgangs.

Der Betankungsvorgang wird ebenfalls beendet, sollte das Zapfventil aus dem Tankeinfüllstutzen 16 herausgezogen und die Schiebehülse 11 wieder von der Freigabestellung der Figur 3 mittels der Feder 12 zurück in die Sperrstellung der Figur 1 oder 2 geschoben werden. Durch die magnetische Wechselwirkung zwischen dem Ringmagneten 13 (Wirkmagnet 13) und dem Magneten 10 wird das Sicherheitsventil 8 in Richtung stromab zurück in seine Schließstellung bewegt. Ist das Hauptventil 5 jetzt noch geöffnet, kommt es durch den Druckanstieg im Auslaufrohr 3 zu einer vorstehend beschriebenen Auslösung der Tankvollabschaltung und damit einem Schließen des Hauptventils 5.

Im Zuge des Betankungsvorgangs entweichende Gase kann das Zapfventil in üblicher Weise durch einen nicht dargestellten Gasabsaugkanal rückführen.

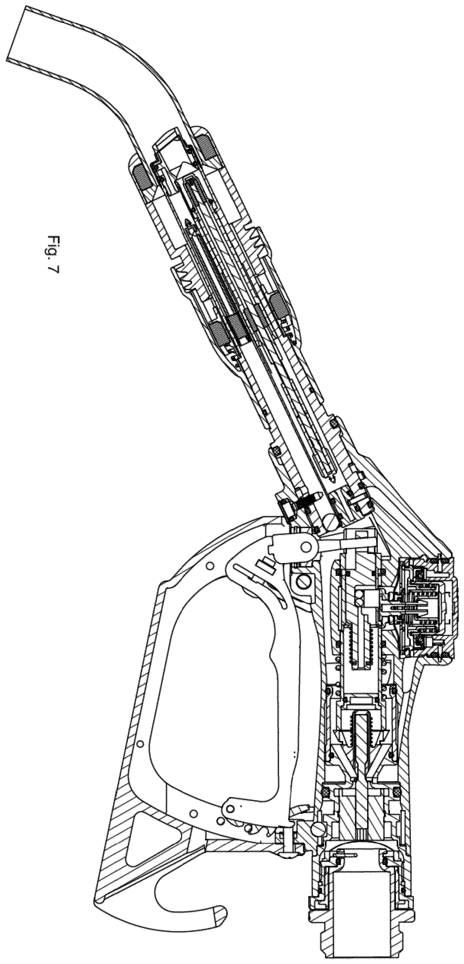

In Fig. 7 bis 9 ist das Auslaufende des Auslaufrohrs 3 vollständig eingeführt in den Tankstutzen 16 eines Harnstoffstanks eines PKW nach ISO 22241-5 mit Ringmagnet. Die Funktionsweise ist grundsätzlich identisch wie vorstehend im Kontext mit den Fig. 4 bis 6 beschrieben.

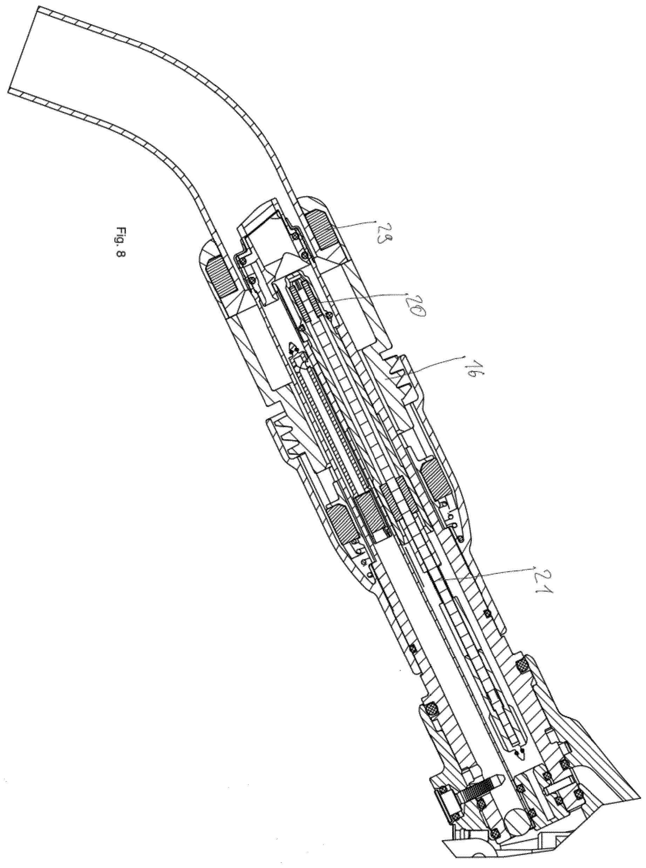

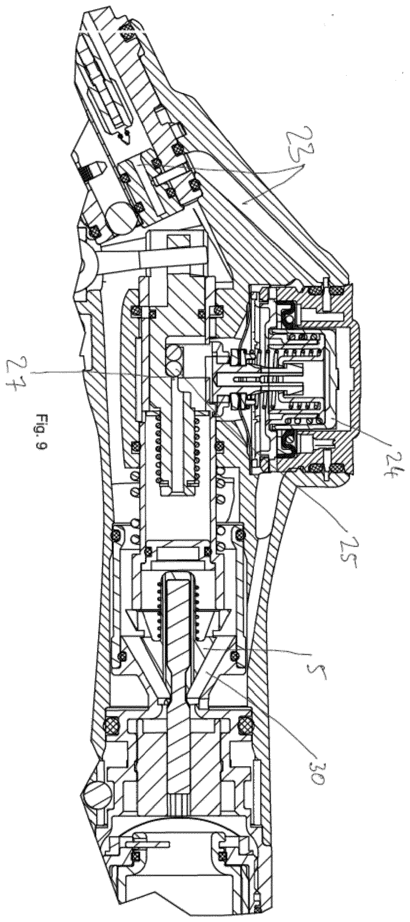

Der Tankstutzen bzw. Einfüllstutzen weist einen Ringmagneten 29 auf, dieser Ringmagnet kennzeichnet Tank und Tankstutzen als geeignet für einen größeren Volumenstrom. Bei eingeführtem Zapfventil wechselwirkt der Ringmagnet 29 mit dem Sensormagnet 20 und zieht die Sensorstange 21 in Axialrichtung stromab gegen ihre Vorspannung. Dies bewirkt, dass der Druckkanal 23 geöffnet wird, wie in den Figuren 8 und 9 zu erkennen.

Der im Auslaufrohr herrschende Druck (typischerweise etwa 3,5 bar) steht jetzt über den geöffneten Druckkanal 23 in Wirkverbindung mit der Membraneinrichtung 24 und lässt diese ihre in Fig. 9 dargestellte untere Stellung einnehmen. In dieser unteren Stellung kommen die Membranrollen 25 mit dem zweiten Anschlag 27 in Wechselwirkung und erlauben beim Ziehen des Schalthebels 4 einen deutlich größeren Öffnungshub des Hauptventils 5 mit einem entsprechend größeren Öffnungsspalt 30, der einen maximalen Volumenstrom von etwa 20 l/min erlaubt. Auf diese Weise hat die Membraneinrichtung 24 im Zusammenwirken mit der Positionierung der Membranrollen 25 als Steuereinrichtung den zweiten (höheren) maximalen Volumenstrom eingestellt.

Im Zuge des Betankens fällt der Druck im Auslaufrohr und damit auch im Druckkanal 23 unter den Schwellwert, der die Membraneinrichtung 24 in ihre untere Stellung verschiebt. Im laufenden Betankungsvorgang bleiben die Membranrollen 25 durch Reib- bzw. Klemmwirkung im Eingriff mit dem zweiten Anschlag 27. Nach Abschluss des Betankungsvorgang springt die Membraneinrichtung 24 in ihrer obere Stellung zurück, in der nur der erste maximale Volumenstrom möglich ist.

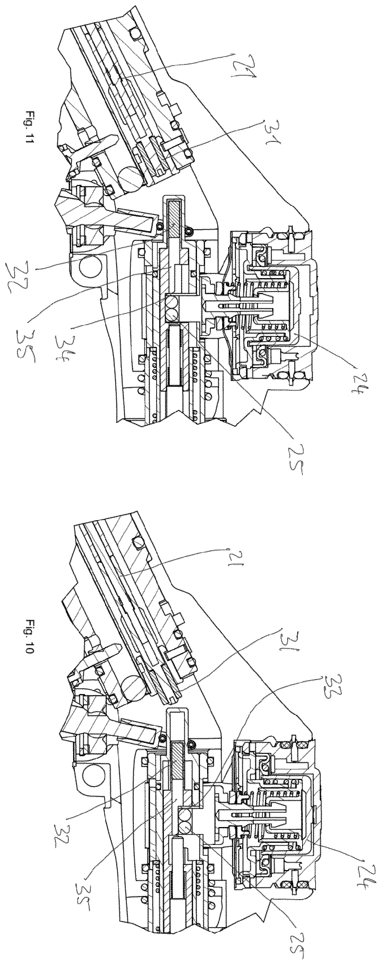

Die Fig. 10 und 11 ist eine alternative Ausführungsform der Erfindung gezeigt, in der die Signalübertragung zwischen Sensorstange 21 und der Steuereinrichtung magnetisch erfolgt.

Die Sensorstange 21 ist an ihrem vom Auslauf wegweisenden Ende mit einem ersten Steuermagneten 31 versehen. Dieser wirkt auf Abstoßung zusammen mit einem zweiten Steuermagneten 32, der verschieblich an einem Verschiebeelement 35 angeordnet ist. Abhängig von der Verschiebestellung dieses Verschiebeelements 35 nimmt die Membraneinrichtung 24 mit Membranrollen 25 entweder die in Fig. 10 dargestellte obere Stellung ein (angedeutet bei 33), oder die in Figur 11 dargestellte untere Stellung (angedeutet bei 34).

In der in Figur 11 dargestellten Stellung des Verschiebeelements 35 befinden sich die Membranrollen 25 in der Stellung, die den größeren Öffnungshub des Hauptventils 5 ermöglicht (zweiter maximaler Volumenstrom).

In der in Figur 10 dargestellten Stellung des Verschiebeelements 35 werden die Membranrollen 25 mit der Membraneinrichtung 24 von dem Verschiebeelement 35 angehoben in die Stellung, die lediglich den kleineren Öffnungshub des Hauptventils 5 ermöglicht (erster maximaler Volumenstrom).

Im Normalfall nimmt die Sensorstange 21 die in Figur 10 dargestellte Stellung ein, so dass das Zapfventil lediglich den ersten maximalen Volumenstrom einstellt.

Nur wenn beim Einführen des Zapfventils in einen Tankstutzen 16 eines Harnstoffstanks eines PKW nach ISO 22241-5 mit Ringmagnet dieser Ringmagnet 29 mit dem Sensormagnet 20 wechselwirkt und die Sensorstange 21 in Axialrichtung stromab gegen ihre Vorspannung zieht, nehmen Sensorstange 21 und erster Steuermagnet 31 die in Figur 11 gezeigte Stellung ein. Der zweite Steuermagnet 32 mit dem Verschiebeelement 35 bewegt sich durch die fehlende bzw. verminderte magnetische Abstoßung in die in Figur 11 dargestellte Stellung, so dass jetzt der größere zweite maximale Volumenstrom freigegeben ist.

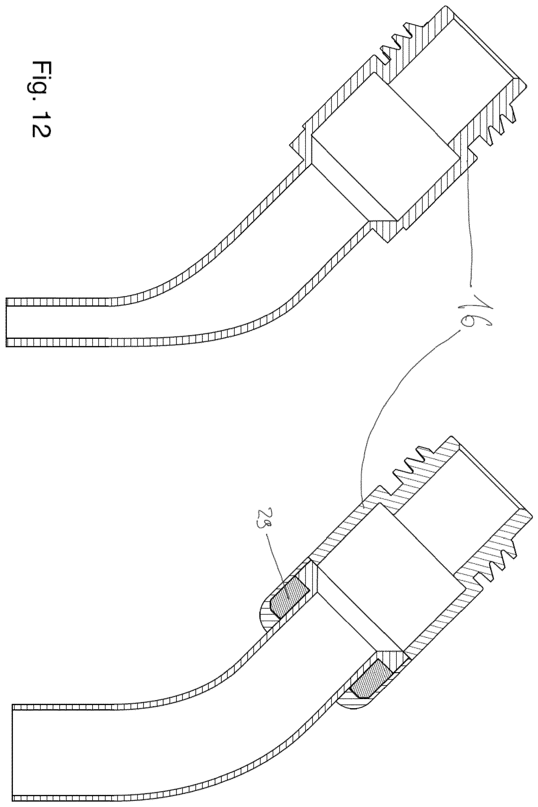

Fig. 12 zeigt schematisch Einfüllstutzen mit Schnittstellen nach ISO 22241-5 mit und ohne Ringmagnet 29.

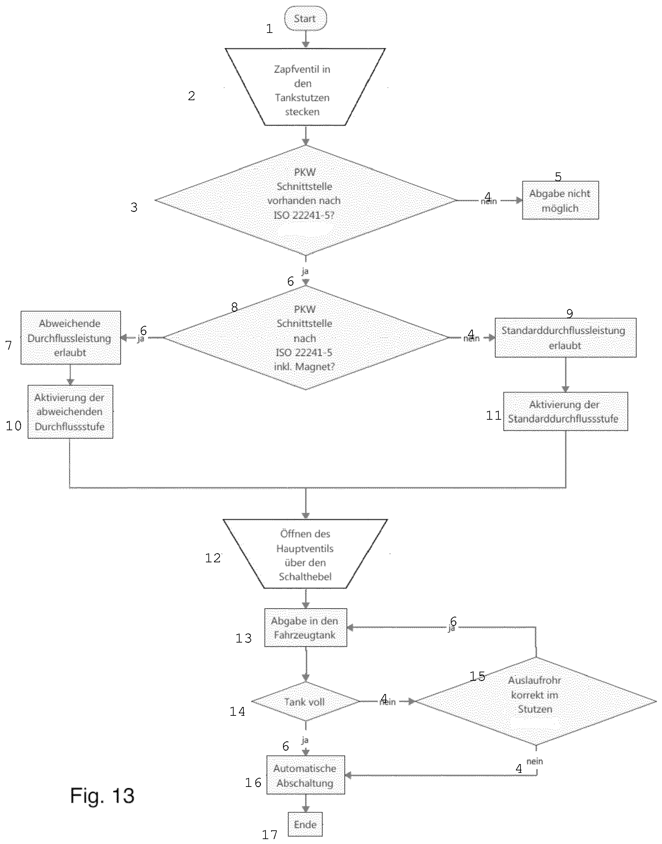

Fig. 13 zeigt schematisch in einem Ablaufdiagramm die Arbeitsweise eines erfindungsgemäßen Zapfventils.
1. Start
2. Zapfventil in den Tankstutzen stecken
3. PKW Schnittstelle vorhanden nach ISO 22241 5?
4. nein
5. Abgabe nicht möglich
6. ja
7. Abweichende Durchflussleistung erlaubt
8. PKW Schnittstelle nach ISO 22241 5 inkl. Magnet?
9. Standarddurchflussleistung erlaubt
10. Aktivierung der abweichenden Durchflussstufe
11. Aktivierung der Standarddurchflussstufe
12. Öffnen des Hauptventils über den Schalthebel
13. Abgabe in den Fahrzeugtank 14. Tank voll
15. Auslaufrohr korrekt im Stutzen
16. Automatische Abschaltung
17. Ende

Eine Abgabe von AdBlue ist überhaupt nur dann möglich, wenn das Ventil in einen Tankstutzen nach ISO 2241-5 eingeführt ist, da ansonsten das Sicherheitsventil 7 geschlossen bleibt. Wird ein solcher Tankstutzen erkannt, ist standardmäßig die Standarddurchflussleistung (erster einstellbarer maximaler Volumenstrom, im Ausführungsbeispiel 5 l/min) freigegeben.

Wird zusätzlich ein Ringmagnet 29 erkannt, wird auf die beschriebene Art und Weise die abweichende Durchflussstufe (zweiter einstellbarer maximaler Volumenstrom, im Ausführungsbeispiel 20 l/min) freigegeben.

## Patentansprüche

1. Zapfventil zur Abgabe einer Flüssigkeit in einen Tank eines Kraftfahrzeugs, wobei:
a) das Zapfventil einen ersten einstellbaren maximalen Volumenstrom aufweist,
b) das Zapfventil einen zweiten einstellbaren maximalen Volumenstrom aufweist, der höher als der erste einstellbare maximale Volumenstrom ist,
c) umfassend eine Steuereinrichtung (24, 25), mittels der wahlweise der erste oder zweite maximale Volumenstrom einstellbar ist, **gekennzeichnet durch**
d) eine Sensoreinrichtung (20, 21), die zur Wechselwirkung mit einem dem Tank des Kraftfahrzeugs zugeordneten Signalgeber (29) ausgebildet ist, und die die Steuereinrichtung ansteuert.

2. Zapfventil nach Anspruch 1, **dadurch gekennzeichnet, dass** der erste einstellbare maximale Volumenstrom 2 bis 10 l/min, vorzugsweise 3 bis 8 l/min, weiter vorzugsweise 4 bis 6 l/min beträgt.

3. Zapfventil nach Anspruch 1 oder 2, **dadurch gekennzeichnet, dass** der zweite einstellbare maximale Volumenstrom 12 bis 30 l/min, vorzugsweise 15 bis 25 l/min, weiter vorzugsweise 18 bis 22 l/min beträgt.

4. Zapfventil nach einem der Ansprüche 1 bis 3, **dadurch gekennzeichnet, dass** standardmäßig der erste einstellbare maximale Volumenstrom eingestellt ist und der zweite einstellbare maximale Volumenstrom nur dann eingestellt wird, wenn die Sensoreinrichtung (20, 21) einen dem Tank des Kraftfahrzeugs zugeordneten entsprechenden Signalgeber (29) detektiert.

5. Zapfventil nach einem der Ansprüche 1 bis 4, **dadurch gekennzeichnet, dass** die Steuereinrichtung (24, 25) und/oder die Sensoreinrichtung (20, 21) keine Fremdenergie erfordern, wobei Fremdenergie solche Energie bezeichnet, die für den Betrieb des Zapfventils zugeführt oder einer im Zapfventil anordenbaren Energiequelle entnommen wird.

6. Zapfventil nach einem der Ansprüche 1 bis 4, **dadurch gekennzeichnet, dass** die Sensoreinrichtung (20, 21) zur Detektion eines dem Tank des Kraftfahrzeugs zugeordneten Magnetgebers (29) ausgebildet ist.

7. Zapfventil nach Anspruch 6, **dadurch gekennzeichnet, dass** die Sensoreinrichtung 20, 21) zur Detektion eines Ringmagneten (29) eines Einfüllstutzens nach ISO 22241-5 mit Ringmagnet ausgebildet ist.

8. Zapfventil nach Anspruch 6 oder 7, **dadurch gekennzeichnet, dass** die Sensoreinrichtung 20, 21) einen im Bereich des Auslaufrohrs des Zapfventils verschieblich angeordneten Magneten (20) aufweist, der mit einer mechanischen Signalübertragungsvorrichtung (21) zur Übertragung eines Steuersignals an die Steuereinrichtung verbunden ist.

9. Zapfventil nach Anspruch 8, **dadurch gekennzeichnet, dass** die mechanische Signalübertragungsvorrichtung eine mit dem verschieblich angeordneten Magneten (20) kinematisch gekoppelte Signalstange (21) aufweist, die in Axialrichtung des Auslaufrohrs des Zapfventils verschieblich ist.

10. Zapfventil nach Anspruch 9, **dadurch gekennzeichnet, dass** die Signalstange (21) im vom verschieblich angeordneten Magneten (20) abgewandten Bereich zum Verschließen bzw. Freigeben eines Druckkanals (23) ausgebildet ist.

11. Zapfventil nach Anspruch 9, **dadurch gekennzeichnet, dass** die Signalstange (21) im vom verschieblich angeordneten Magneten (20) abgewandten Bereich einen ersten Steuermagneten (31) aufweist, der zur Wechselwirkung mit einem zweiten Steuermagneten (32) der Steuereinrichtung ausgebildet ist.

12. Zapfventil nach einem der Ansprüche 1 bis 11, **dadurch gekennzeichnet, dass** die Wirkverbindung zwischen Sensoreinrichtung und Steuereinrichtung durch Druck, mechanisch und/oder magnetisch erfolgt.

13. Zapfventil nach einem der Ansprüche 1 bis 9, **dadurch gekennzeichnet, dass** die Steuereinrichtung (24, 25) zur Einstellung eines ersten und zweiten maximalen Öffnungshubs eines Hauptventils des Zapfventils ausgebildet ist.

14. Zapfventil nach einem der Ansprüche 1 bis 13, **dadurch gekennzeichnet, dass** es zur Abgabe von Harnstofflösung ausgebildet ist.

15. Zapfsäule zur kombinierten Abgabe von Kraftstoffen und Harnstofflösung, mit wenigstens einem Zapfventil zur Abgabe von Kraftstoff, **dadurch gekennzeichnet, dass** sie wenigstens ein Zapfventil nach Anspruch 14 zur Abgabe von Harnstofflösung aufweist.

## Claims

1. Filling nozzle for dispensing a liquid into a tank of a motor vehicle, wherein:
a) the filling nozzle has a first settable maximum volume flow,
b) the filling nozzle has a second settable maximum volume flow higher than the first settable maximum volume flow,
c) comprising a control device (24, 25) by means of which selectively the first or second maximum volume flow can be set, **characterized by**
d) a sensor device (20, 21) which is designed to interact with a signal transmitter (29) assigned to the tank of the motor vehicle and which activates the control device.

2. Filling nozzle according to Claim 1, **characterized in that** the first settable maximum volume flow is 2 to 10 1/min, preferably 3 to 8 1/min, more preferably 4 to 6 1/min.

3. Filling nozzle according to Claim 1 or 2, **characterized in that** the second settable maximum volume flow is 12 to 30 l/min, preferably 15 to 25 l/min, more preferably 18 to 22 l/min.

4. Filling nozzle according to any of Claims 1 to 3, **characterized in that** the first settable maximum volume flow is set as standard, and the second settable maximum volume flow is set only if the sensor device (20, 21) detects a corresponding signal transmitter (29) assigned to the tank of the motor vehicle.

5. Filling nozzle according to any of Claims 1 to 4, **characterized in that** the control device (24, 25) and/or the sensor device (20, 21) require no external energy, wherein external energy refers to energy which is supplied for the operation of the filling nozzle or which is extracted from an energy source that is arrangeable in the filling nozzle.

6. Filling nozzle according to any of Claims 1 to 4, **characterized in that** the sensor device (20, 21) is designed to detect a magnetic transmitter (29) assigned to the tank of the motor vehicle.

7. Filling nozzle according to Claim 6, **characterized in that** the sensor device (20, 21) is designed to detect an annular magnet (29) of a filler neck conforming to ISO 22241-5 with annular magnet.

8. Filling nozzle according to Claim 6 or 7, **characterized in that** the sensor device (20, 21) has a magnet (20) which is arranged displaceably in the region of the discharge pipe of the filling nozzle and which is connected to a mechanical signal transmission device (21) for transmitting a control signal to the control device.

9. Filling nozzle according to Claim 8, **characterized in that** the mechanical signal transmission device has a signal rod (21) which is kinematically coupled to the displaceably arranged magnet (20) and which is displaceable in an axial direction of the discharge pipe of the filling nozzle.

10. Filling nozzle according to Claim 9, **characterized in that** the signal rod (21) is, in the region averted from the displaceably arranged magnet (20), designed to close and open up a pressure channel (23).

11. Filling nozzle according to Claim 9, **characterized in that** the signal rod (21), in the region averted from the displaceably arranged magnet (20), has a first control magnet (31) which is designed to interact with a second control magnet (32) of the control device.

12. Filling nozzle according to any of Claims 1 to 11, **characterized in that** the operative connection between sensor device and control device is realized by pressure, mechanically and/or magnetically.

13. Filling nozzle according to any of Claims 1 to 9, **characterized in that** the control device (24, 25) is designed to set a first and a second maximum opening stroke of a main valve of the filling nozzle.

14. Filling nozzle according to any of Claims 1 to 13, **characterized in that** said filling nozzle is designed for dispensing urea solution.

15. Filling pump for the combined dispensing of fuels and urea solution, having at least one filling nozzle for dispensing fuel, **characterized in that** said filling pump has at least one filling nozzle according to Claim 14 for dispensing urea solution.

## Revendications

1. Pistolet de distribution permettant de distribuer un liquide dans un réservoir d'un véhicule automobile,
a) le pistolet de distribution présentant un premier débit volumique maximal réglable,
b) le pistolet de distribution présentant un deuxième débit volumique maximal réglable qui est supérieur au premier débit volumique maximal réglable,
c) comprenant un dispositif de commande (24, 25) qui permet de régler au choix le premier ou le deuxième débit volumique maximal,
**caractérisé par**
d) un dispositif capteur (20, 21) qui est réalisé pour interagir avec un émetteur de signal (29) associé au réservoir du véhicule automobile et qui pilote le dispositif de commande.

2. Pistolet de distribution selon la revendication 1, **caractérisé en ce que** le premier débit volumique maximal réglable est égal à 2 à 10 l/min, de préférence à 3 à 8 l/min, de plus grande préférence à 4 à 6 l/min.

3. Pistolet de distribution selon la revendication 1 ou 2, **caractérisé en ce que** le deuxième débit volumique maximal réglable est égal à 12 à 30 l/min, de préférence à 15 à 25 l/min, de plus grande préférence à 18 à 22 l/min.

4. Pistolet de distribution selon l'une quelconque des revendications 1 à 3, **caractérisé en ce que** le premier débit volumique maximal réglable est réglé par défaut, et le deuxième débit volumique maximal réglable n'est réglé que si le dispositif capteur (20, 21) détecte un émetteur de signal (29) correspondant, associé au réservoir du véhicule automobile.

5. Pistolet de distribution selon l'une quelconque des revendications 1 à 4, **caractérisé en ce que** le dispositif de commande (24, 25) et/ou le dispositif capteur (20, 21) ne nécessite(nt) aucune énergie extérieure, l'énergie extérieure désignant une énergie du type qui est amenée pour le fonctionnement du pistolet de distribution ou qui est prélevée sur une source d'énergie pouvant être disposée dans le pistolet de distribution.

6. Pistolet de distribution selon l'une quelconque des revendications 1 à 4, **caractérisé en ce que** le dispositif capteur (20, 21) est réalisé pour détecter un émetteur magnétique (29) associé au réservoir du véhicule automobile.

7. Pistolet de distribution selon la revendication 6, **caractérisé en ce que** le dispositif capteur (20, 21) est réalisé pour détecter un aimant annulaire (29) d'un bouchon de remplissage selon ISO 22241-5 doté d'un aimant annulaire.

8. Pistolet de distribution selon la revendication 6 ou 7, **caractérisé en ce que** le dispositif capteur (20, 21) présente un aimant (20) disposé de manière déplaçable au niveau du tuyau de sortie du pistolet de distribution et qui est relié à un dispositif de transmission de signal mécanique (21) pour transmettre un signal de commande au dispositif de commande.

9. Pistolet de distribution selon la revendication 8, **caractérisé en ce que** le dispositif de transmission de signal mécanique présente une tige de signalisation (21) couplée de manière cinématique à l'aimant (20) disposé de manière déplaçable et qui est déplaçable dans la direction axiale du tuyau de sortie du pistolet de distribution.

10. Pistolet de distribution selon la revendication 9, **caractérisé en ce que** la tige de signalisation (21) est réalisée dans la zone détournée de l'aimant (20) disposé de manière déplaçable pour fermer ou libérer une conduite de pression (23).

11. Pistolet de distribution selon la revendication 9, **caractérisé en ce que** la tige de signalisation (21) présente dans la zone détournée de l'aimant (20) disposé de manière déplaçable un premier aimant de commande (31) qui est réalisé pour interagir avec un deuxième aimant de commande (32) du dispositif de commande.

12. Pistolet de distribution selon l'une quelconque des revendications 1 à 11, **caractérisé en ce que** la relation active entre le dispositif capteur et le dispositif de commande est effectuée par pression, mécaniquement et/ou magnétiquement.

13. Pistolet de distribution selon l'une quelconque des revendications 1 à 9, **caractérisé en ce que** le dispositif de commande (24, 25) est réalisé pour régler une première et une deuxième course d'ouverture maximale d'une soupape principale du pistolet de distribution.

14. Pistolet de distribution selon l'une quelconque des revendications 1 à 13, **caractérisé en ce qu'**il est réalisé pour la distribution d'une solution d'urée.

15. Distributeur de carburant permettant de distribuer des carburants et une solution d'urée, comprenant au moins un pistolet de distribution pour distribuer du carburant, **caractérisé en ce qu'**il présente au moins un pistolet de distribution selon la revendication 14 pour distribuer une solution d'urée.
